# EUROPÄISCHE PATENTANMELDUNG

(11) **EP 4 756 147 A1**
(43) Veröffentlichungstag der Anmeldung: **10.06.2026**
(21) Anmeldenummer: 25219560.7
(22) Anmeldetag: 28.11.2025
(51) Int. Cl.: E04D 1/18, H02S 20/23, E04D 1/00, E04D 1/30, E04D 1/34, E04D 3/16, E04D 3/361, E04D 3/365

(54) **DACHPLATTE**

(30) Priorität: 03.12.2024 DE 202024107019 U; 04.03.2025 DE 202025101151 U
(71) Anmelder: SL Rack GmbH, 83527 Haag (DE)
(72) Erfinder: Bauer, Georg, 83527 Haag i. OB (DE); Altmann, Andreas, 83059 Kolbermoor (DE)
(74) Vertreter: Lichtnecker, Markus Christoph

(57) **Zusammenfassung**

Die Erfindung betrifft eine Dachplatte, aufweisend eine, vorzugsweise rechteckige, Grundfläche mit einem Abdeckbereich zum Abdecken eines ziegelfreien Dachbereichs und mit zwei Auflagebereichen zum Auflegen von Dachziegeln, wobei die Auflagebereiche an gegenüberliegenden Seiten des Abdeckbereichs angeordnet sind, zwei, vorzugsweise rechtwinklig, über die Grundfläche auskragende Stege, wobei zwischen den Auflagebereichen und dem Abdeckbereich jeweils ein Steg vorgesehen ist, und wenigstens einen, vorzugsweise rechtwinklig, über die Grundfläche auskragenden Einhängeabschnitt, der an einem im montierten Zustand oberen Bereich der Grundfläche vorgesehen ist, wobei der Einhängeabschnitt bezüglich der Grundfläche in die entgegengesetzte Richtung wie die Stege auskragt.

## Beschreibung

Die Erfindung betrifft eine Dachplatte, aufweisend eine, vorzugsweise rechteckige, Grundfläche mit einem Abdeckbereich zum Abdecken eines ziegelfreien Dachbereichs und mit zwei Auflagebereichen zum Auflegen von Dachziegeln, wobei die Auflagebereiche an gegenüberliegenden Seiten des Abdeckbereichs angeordnet sind.

Ferner weist die Dachplatte zwei, vorzugsweise rechtwinklig, über die Grundfläche auskragende Stege auf, wobei zwischen den Auflagebereichen und dem Abdeckbereich jeweils ein Steg vorgesehen ist.

Eine derartige Dachplatte ist beispielsweise aus DE 20 2024 100 540 U1 bekannt. Der Inhalt der DE 20 2024 100 540 U1 wird - vor allem in Hinblick auf die Ausführbarkeit und/oder mögliche Ausgestaltungen der Erfindung - vollständig in diese Anmeldung mit einbezogen.

Nachteilig an der DE 20 2024 100 540 U1 ist, dass zur Befestigung an einer Traglattung eine Durchtrittsöffnung vorgesehen ist. Die Dachplatte wird an dieser Durchtrittsöffnung über einen Nagel oder eine Schraube an der Traglattung befestigt. Dadurch gestaltet sich die Montage vergleichsweise aufwändig, da stets ein Werkzeug, z.B. ein Hammer oder ein Akkuschrauber, mitgeführt werden muss. Ferner kann Wasser durch die Durchtrittsöffnungen eindringen.

Auch DE 20 2024 107 019 U1 offenbart eine ähnlich aufgebaute Dachplatte. Der Inhalt der DE 20 2024 107 019 U1 wird - vor allem in Hinblick auf die Ausführbarkeit und/oder mögliche Ausgestaltungen der Erfindung - vollständig in diese Anmeldung mit einbezogen.

Gemäß der DE 20 2024 107 019 U1 kann die Dachplatte über nach oben abgewinkelte Einhängeabschnitte werkzeuglos an einem benachbarten und/oder an einem auf dem Auflagebereich aufliegenden Dachziegel eingehängt werden.

Dies verkompliziert die Montage, da die Dachplatte stets mit den Dachziegeln zusammenwirken muss, um am Dach zu halten. Zudem kann es durch die Einhängeabschnitte zu Beschädigungen der Dachziegel kommen.

DE 20 2022 104 792 U1 offenbart eine Abdeckvorrichtung zum Abdecken eines Bereichs eines Dachs. Der Inhalt der DE 20 2022 104 792 U1 wird - vor allem in Hinblick auf die Ausführbarkeit und/oder mögliche Ausgestaltungen der Metallschürze/Metallplatte der Erfindung - vollständig in diese Anmeldung mit einbezogen.

Nachteilig daran ist, dass die Abdeckvorrichtung insgesamt vergleichsweise instabil ist. Dies erschwert die Handhabung bei der Montage. Ferner sind zusätzliche Bauteile, wie beispielsweise eine Trittschutzvorrichtung, zur sicheren Montage notwendig.

Es ist daher eine Aufgabe der Erfindung, eine Dachplatte, ein System mit einer Dachplatte sowie ein Verfahren zu schaffen, bei der/dem die Montage auf einem Dach vereinfacht wird.

Die Lösung dieser Aufgabe erfolgt durch die Gegenstände sowie das Verfahren mit den Merkmalen der unabhängigen Ansprüche.

Beispielsweise kann die Dachplatte zur Montage auf einem Dach verwendet werden oder bereits auf dem Dach montiert sein. Geschützt wird die Dachplatte somit sowohl im unmontierten als auch im montierten Zustand.

Die Dachplatte ist beispielsweise zum Abdecken eines ziegelfreien Dachbereichs, vorzugsweise zur Befestigung eines Solarpanels oder eines Photovoltaikmoduls, ausgebildet oder kann hierzu verwendet werden.

Bei dem Dach kann es sich z.B. um ein Schrägdach handeln.

Vorzugsweise kann in dem Bereich und/oder oberhalb des Bereichs ein Dachhaken am Dach befestigt bzw. abgestützt werden. Am Dachhaken kann wiederum ein Solarpanel oder ein Photovoltaikmodul befestigt, z.B. verschraubt und/oder verklemmt, werden.

Erfindungsgemäß weist die Dachplatte eine, vorzugsweise rechteckige, Grundfläche auf.

Die Länge kann beispielsweise zwischen 10 cm und 100 cm, vorzugsweise zwischen 40 cm und 50 cm, z.B. 44 cm oder 45 cm, betragen. Die Breite kann zum Beispiel zwischen 10 cm und 50 cm, vorzugsweise zwischen 20 cm und 40 cm, z.B. 26 cm, 31,5 cm oder 36,5 cm, betragen.

Die Stärke der Grundfläche kann beispielsweise zwischen 0,1 mm und 5 mm, vorzugsweise zwischen 0,2 mm und 2 mm, besonders bevorzugt zwischen 0,5 mm und 1 mm, z.B. 0,8 mm, betragen.

Bevorzugt kann die Dachplatte in, z.B. drei, unterschiedlichen Größen vorliegen, um an unterschiedlichen Dächern eingesetzt werden zu können.

Die Dachplatte ist somit vielseitig einsetzbar.

Beispielsweise kann die Grundfläche plan oder geriffelt sein.

Die Grundfläche weist einen Abdeckbereich zum Abdecken eines ziegelfreien Dachbereichs und zwei Auflagebereiche zum Auflegen von Dachziegeln auf.

Vorzugsweise ist die Dachplatte achsensymmetrisch ausgebildet.

Der Abdeckbereich kann einen Bereich des Dachs abdecken, welcher, z.B. zur Montage eines Solar- und/oder Photovoltaikmoduls, keine Dachziegel aufweist.

Die Dachplatte ist gewissermaßen eine Dachersatzplatte.

Vorzugsweise ist der Abdeckbereich rechteckig.

Beispielsweise kann die Breite des Abdeckbereichs zwischen 10 cm und 40 cm, vorzugsweise zwischen 15 cm und 30 cm, z.B. 16 cm, 21,5 cm oder 26,3 cm, betragen.

Die Auflagebereiche können zum Beispiel rechteckig ausgebildet sein. Vorzugsweise sind die Auflagebereiche gleich groß und/oder baugleich.

Beispielsweise kann die Breite der Auflagebereiche jeweils zwischen 1 cm und 10 cm, z.B. 5 cm, betragen.

Die Auflagebereiche sind an gegenüberliegenden Seiten des Abdeckbereichs angeordnet.

Dachziegel können auf die Auflagebereiche gelegt werden. So wird die Dachplatte von oben gesichert.

Die Dachplatte weist zwei, vorzugsweise rechtwinklig, über die Grundfläche auskragende Stege auf.

Die Stege kragen im montierten Zustand vorzugsweise nach oben bzw. vorne aus.

Beispielsweise kann die Höhe der Stege zwischen 1 cm und 5 cm, z.B. 3 cm, betragen.

Zwischen den Auflagebereichen und dem Abdeckbereich ist jeweils ein Steg vorgesehen.

Auf einen Auflagebereich folgt somit ein Steg, darauf folgen der Abdeckbereich, ein weiterer Steg und ein weiterer Auflagebereich.

Folglich sind die Auflagebereiche durch die Stege vom Abdeckbereich getrennt.

Die Stege dienen als Windbrecher und Verhindern das Eindringen und/oder Sammeln von Verschmutzungen.

Vorzugsweise sind die Stege parallel zueinander orientiert und/oder erstrecken sich über die gesamte Länge der Dachplatte.

Die Dachplatte weist wenigstens oder genau einen, vorzugsweise rechtwinklig, über die Grundfläche auskragenden Einhängeabschnitt auf, der an einem im montierten Zustand oberen Bereich der Grundfläche vorgesehen ist.

Vorzugsweise ist der Einhängeabschnitt am Abdeckbereich angeordnet, z.B. seitlich.

Alternativ oder zusätzlich kann der Einhängeabschnitt am Auflagebereich angeordnet sein.

Die Anordnung an einem seitlichen Bereich der Grundfläche ist unter statischen Gesichtspunkten vorteilhaft.

Der Einhängeabschnitt kragt bezüglich der Grundfläche in die entgegengesetzte Richtung wie die Stege aus, im montierten Zustand also vorzugsweise nach unten bzw. hinten.

So kann der Einhängeabschnitt im montierten Zustand an der Unterseite/Rückseite der Grundfläche angeordnet sein, während die Stege an der Vorderseite angeordnet sind.

Bevorzugt ist der Einhängeabschnitt an der Unterseite/Rückseite des Abdeckbereichs und/oder an der Unterseite/Rückseite eines Auflagebereichs vorgesehen.

Beispielsweise kann die Höhe des Einhängeabschnitts zwischen 0,5 cm und 5 cm, z.B. 1,5 cm, betragen.

Über den Einhängeabschnitt kann die Dachplatte vorzugsweise an einer Dachlatte eingehängt werden.

Die Montage der Dachplatte kann daher werkzeuglos erfolgen, wodurch z.B. Nägel und/oder Schrauben entfallen können.

Die Dachplatte ist darüber hinaus automatisch richtig positioniert. Beispielsweise kann diese ohne Abstand an einer daneben, davor und/oder darüber liegenden Konstruktion, z.B. einem Dachziegel, einer Montageschiene und/oder einem Dachhaken für ein Solar- und/oder Photovoltaikmodul, anliegen. So wird ein Eindringen von Verschmutzungen und/oder Regenwasser vermieden.

Vorzugsweise umfasst die Grundfläche ein Metallmaterial, z.B. Aluminium, oder besteht daraus. Bei der Dachplatte kann es sich somit zum Beispiel um eine Metallplatte handeln.

Die Stege und/oder der Einhängeabschnitt können vorzugsweise ebenfalls ein Metallmaterial, z.B. Aluminium, umfassen oder daraus bestehen. Alternativ oder zusätzlich ist beispielsweise auch ein Kunststoffmaterial denkbar.

Der Einhängeabschnitt ist vorzugsweise plattenförmig ausgebildet.

Eine Platte bietet eine vergleichsweise große Auflagefläche beim Einhängen an der Dachlatte.

Vorzugsweise ist der Einhängeabschnitt schmäler als die Breite der Grundfläche. Auf diese Weise kann Material eingespart werden.

Die Breite und/oder Höhe kann z.B. zwischen 1 cm und 5 cm, z.B. 3 cm, betragen.

Beispielsweise kann der Einhängeabschnitt eine Einhängenase bilden.

Bevorzugt ist der Einhängeabschnitt rechtwinklig zu den Stegen orientiert. Dadurch wird die Montage an einer waagerechten Dachlatte ermöglicht.

Vorzugsweise kann der Einhängeabschnitt als Abkantung ausgebildet sein.

Beispielsweise kann ein oberer Abschnitt der Grundfläche bei der Herstellung umgebogen und/oder abgekantet werden.

Dadurch gestaltet sich die Herstellung kostengünstig.

Vorzugsweise sind die Grundfläche und der Einhängeabschnitt einstückig ausgebildet. Beispielsweise kann der Einhängeabschnitt als Abkantung und/oder als eine, z.B. umgebogene und/oder ausgestanzte oder ausgeschnittene, Lasche ausgebildet sein.

Dadurch wird ein sicherer Halt zwischen der Grundfläche und dem Einhängeabschnitt gewährleistet.

Alternativ können die Grundfläche und der Einhängeabschnitt auch nachträglich miteinander verbunden, z.B. verschweißt, verschraubt und/oder verklebt, werden.

Vorzugsweise sind die Grundfläche und die Stege einstückig ausgebildet.

Beispielsweise können die Stege bei der Herstellung gefalzt und/oder abgekantet werden.

Dadurch wird ein sicherer Halt zwischen der Grundfläche und den Stegen gewährleistet.

Alternativ können die Grundfläche und die Stege auch nachträglich miteinander verbunden, z.B. verschweißt, verschraubt und/oder verklebt, werden.

Beispielsweise sind an, den Stegen gegenüberliegenden, Endbereichen der Auflagebereiche Erhebungen vorgesehen.

Vorzugsweise erstrecken sich die Erhebungen über die gesamte Länge der Dachplatte.

Die Erhebungen dienen beispielsweise als Führung für Regenwasser.

Die Grundfläche und die Erhebungen können vorzugsweise einstückig ausgebildet sein.

Beispielsweise können die Erhebungen bei der Herstellung gefalzt und/oder abgekantet werden.

Dadurch wird ein sicherer Halt zwischen der Grundfläche und den Erhebungen gewährleistet.

Alternativ können die Grundfläche und die Erhebungen auch nachträglich miteinander verbunden, z.B. verschweißt, verschraubt und/oder verklebt, werden.

Bevorzugt sind der Abdeckbereich und die Auflagebereiche in derselben Ebene angeordnet.

Dadurch, dass keine unterschiedlichen Niveaus zwischen den Auflagebereichen und dem Abdeckbereich vorliegen, ist eine formschlüssige Montage auf dem Dach möglich.

Alternativ können diese Bereiche auch in unterschiedlichen Ebenen angeordnet sein, wie es z.B. in DE 20 2024 100 540 U1 beschrieben wird.

Die Grundfläche ist vorzugsweise öffnungsfrei.

Aufgrund des Einhängeabschnitts ist es nicht erforderlich, dass die Grundfläche zur Montage eine Durchtrittsöffnung für einen Nagel oder eine Schraube aufweist.

Die Grundfläche ist somit dicht und es kann keine Flüssigkeit hindurchdringen.

Optional kann an einem dem Einhängeabschnitt gegenüberliegenden, im montierten Zustand unteren Bereich der Grundfläche ein Dichtabschnitt vorgesehen sein. Der Dichtabschnitt kann beispielsweise ein Schaumstoff-, ein Gummi- und/oder ein flexibles Metallmaterial, z.B. Blei, aufweisen oder daraus bestehen. Dadurch kann eine Dichtung und/oder Anpassung an einen darunterliegenden Dachziegel erfolgen.

Weiterbildungen der Erfindung sind auch den abhängigen Ansprüchen, der Beschreibung sowie den beigefügten Zeichnungen zu entnehmen.

Gemäß einer Ausführungsform ist der Einhängeabschnitt bezüglich einer Oberkante der Grundfläche zurückversetzt.

Beispielsweise kann der Einhängeabschnitt zwischen 1 cm und 5 cm, vorzugsweise zwischen 2 cm und 3 cm, z.B. 2,9 cm, von der Oberkante der Grundfläche zurückversetzt angeordnet sein.

Bevorzugt ist der Einhängeabschnitt von der Oberkante der Grundfläche beabstandet. Vorzugsweise ist der Abstand von der Oberkante größer als 0 cm, bevorzugt größer oder gleich 1 cm, 2 cm oder 3 cm.

Bei der Montage ist die Dachplatte folglich weiter oben angeordnet, sodass eine sichere Wasserableitung gewährleistet wird.

Alternativ kann der Einhängeabschnitt auch unmittelbar an der Oberkante angeordnet sein.

Nach einer weiteren Ausführungsform sind wenigstens oder genau zwei voneinander beabstandete Einhängeabschnitte vorgesehen.

Bevorzugt sind die Einhängeabschnitte an unterschiedlichen Abdeckbereichen angeordnet. Die Dachplatte wird somit an zwei Seiten gehalten, was unter statischen Gesichtspunkten vorteilhaft ist.

Grundsätzlich sind auch mehr als zwei, z.B. drei, vier oder mehr, Einhängeabschnitte denkbar, wodurch de Halt weiter erhöht wird.

Gemäß einer weiteren Ausführungsform ist an einem im montieren Zustand unteren Bereich der Grundfläche eine plattenförmige Metallschürze vorgesehen.

Die Metallschürze unterscheidet sich vorzugsweise von der Grundfläche. Beispielswiese können sich die Materialien und/oder die Materialstärken voneinander unterscheiden. So kann zum Beispiel die Metallschürze dünner sein als die Grundfläche.

Die Metallschürze kann beispielsweise ein Aluminium- und/oder Bleimaterial umfassen oder daraus bestehen.

Vorzugsweise handelt es sich bei der Metallplatte um ein gewalztes Aluminiumblech und/oder Bleiblech.

Auch wenn Blei grundsätzlich als Material für die Metallschürze in Frage kommt, ist Blei unter gesundheitlichen Aspekten nachteilhaft. Daher ist die Metallschürze bevorzugt bleifrei.

Die Metallschürze ist bevorzugt öffnungsfrei. Folglich weist die Metallschürze beispielsweise keine Aussparungen auf. Auf diese Weise wird das Dach sicher abgedichtet.

Vorzugweise ist die Metallschürze rechteckförmig, z.B. quadratisch, und/oder plattenförmig ausgebildet.

Bevorzugt ist die Metallschürze zumindest abschnittsweise auf derselben Seite der Grundfläche wie der Einhängeabschnitt an der Grundfläche angeordnet. So kann die Metallschürze im montierten Zustand an der Unterseite/Rückseite der Grundfläche angeordnet sein.

Die Grundfläche überlappt somit die Metallschürze. Wasser kann auf diese Weise abfließen, ohne in das Dach einzudringen.

Vorzugsweise ist die Metallschürze, z.B. unlösbar, mit der Grundfläche verbunden. Beispielswiese kann die Metallschürze an der Grundfläche verklebt, verfalzt, vernietet, verlötet und/oder verschweißt sein. Bevorzugt ist die Metallschürze an der Grundfläche, z.B. punktuell, verdrückt.

Beispielsweise kann sich die Metallschürze über die gesamte Breite der Dachplatte erstrecken. Alternativ kann sich die Metallschürze auch lediglich über die Breite des Abdeckbereichs erstrecken.

Die Länge und/oder Fläche der Metallschürze ist grundsätzlich beliebig. Vorzugsweise ist diese kleiner als die Grundfläche. Beispielsweise kann die Metallschürze maximal 4/5, 3/4, 1/2, 1/3 oder 1/4 so lang und/oder groß sein wie die Grundfläche. Dadurch wird die Handhabung bei der Montage erleichtert.

Die Stärke der Metallschürze kann beispielsweise zwischen 0,1 mm und 3 mm, vorzugsweise zwischen 0,1 mm und 1 mm, besonders bevorzugt zwischen 0,1 mm und 0,5 mm, z.B. 0,3 mm, betragen.

Die Metallschürze weist somit vorzugsweise ein geringes Gewicht auf, was die Handhabung erleichtert.

Die Metallschürze ermöglicht es, einen Bereich eines Dachs auf einfache und kostengünstige Weise abzudichten. Auch ist die Dachplatte dadurch vielseitig einsetzbar. Beispielsweise kann die Dachplatte unabhängig von der Art bzw. Form der Dachziegel eingesetzt werden.

Die Metallschürze kann einen Dichtabschnitt bilden. Dadurch kann eine Dichtung und/oder Anpassung an einen darunterliegenden Dachziegel erfolgen.

Nach einer weiteren Ausführungsform weist die Metallschürze wenigstens einen verformbaren Anpassbereich auf.

Die Metallschürze ist daher zumindest abschnittsweise flexibel und kann an einen darunterliegenden Dachziegel angepasst werden. Die Verformung erfolgt vorzugsweise per Hand, beispielsweise bei der Montage auf dem Dach. Ein Werkzeug ist hierfür bevorzugt nicht erforderlich.

Beispielsweise erfolgt die Verformung irreversibel, d.h. ohne Krafteinwirkung verformt sich die Metallschürze nicht von selbst wieder zurück.

Vorzugsweise weist die Metallschürze zwei Anpassbereiche und einen dazwischenliegenden Zwischenbereich auf.

Die Metallschürze ist vorzugsweise einstückig geformt. Beispielsweise können die Anpassbereiche und der Zwischenbereich einstückig geformt sein. Vorzugsweise weisen diese Bereiche dasselbe Material auf. Für die Anpassung an die Form der Dachziegel ist folglich kein separates Material notwendig. Dadurch können die Herstellungskosten geringgehalten werden.

Gemäß einer Ausführungsform weist die Metallschürze Riffelungen auf.

Die Riffelungen ermöglichen beispielsweise ein kontrolliertes Ablaufen von Regenwasser.

Vorzugsweise sind die Riffelungen in Längsrichtung angeordnet. Verschmutzungen und/oder Wasser kann somit von oben nach unten geregelt abgeführt werden. So kann beispielsweise bei Wind Wasser abgeführt werden.

Auch können die Riffelungen die Stabilität der Metallschürze gegebenenfalls erhöhen. So hängt die Metallschürze beispielsweise nicht durch.

Vorzugsweise weist die gesamte Metallschürze Riffelungen auf.

Alternativ können lediglich die Anpassbereiche Riffelungen aufweisen, während z.B. der Zwischenbereich frei von Riffelungen ist.

Die Metallschürze kann z.B. zunächst gewälzt werden. Anschließend kann eine Riffelung eingebracht werden, beispielsweise mittels einer oder mehrerer Prägerolle/n.

Beispielsweise kann zumindest ein Abschnitt der Metallschürze bereits von vorne herein keine Riffelungen aufweisen. Alternativ kann dieser Abschnitt, z.B. aus herstellungstechnischen Gründen, zunächst geriffelt und anschließend platt gepresst und/oder gewalzt werden. So kann z.B. die gesamte Metallschürze zunächst mit einer Riffelung versehen werden und die Riffelungen anschließend an den Abschnitten, in denen keine Riffelung gewünscht ist, geplättet werden.

Nach einer Ausführungsform weisen die Riffelungen wellenförmige, sägezahnförmige, rechteckförmige und/oder trapezförmige Strukturen auf oder bestehen daraus.

Die Riffelungen sind vorzugsweise einstückig aus der Metallschürze ausgeformt. Es handelt sich beispielsweise um keine Rippen, Stege oder dergleichen, welche z.B. nachträglich mit der Metallplatte verbunden werden.

Bevorzugt sind die Riffelungen auf der Ober- und Unterseite/Rückseite der Metallschürze vorgesehen.

So können Berge auf der Oberseite beispielsweise die Täler auf der Unterseite/Rückseite bilden und umgekehrt.

Gemäß einer Ausführungsform ist ein, vorzugsweise keilförmiges, Dichtelement vorgesehen, das an einem im montierten Zustand oberen Bereich der Grundfläche, vorzugsweise des Abdeckbereichs, angeordnet ist.

Bevorzugt ist das Dichtelement an der Oberseite der Grundfläche vorgesehen.

Das Dichtelement verhindert das Eindringen von Wasser, z.B. von Schlagregen und/oder hochdrückendem Wasser. Ferner kann dieses als Wind- und/oder Insektenschutz dienen.

Beispielsweise kann das Dichtelement ein Schaumstoffmaterial aufweisen oder daraus bestehen.

Das Dichtelement kann bevorzugt als Keil oder Quader ausgebildet sein.

Beispielsweise sorgt eine Keilform dafür, dass das Wasser nach unten abläuft. Ferner kann der obere Teil eines Schaumstoffkeils einfach komprimiert werden, beispielsweise durch einen darauf liegenden Dachziegel.

Das Dichtelement kann Beispielsweise auf der Grundfläche befestigt, vorzugsweise verklebt, sein.

Das Dichtelement kann sich zum Beispiel über die gesamte Breite der Grundfläche oder lediglich über die Breite des Abdeckbereichs erstrecken.

Die Erfindung betrifft auch ein System mit einer erfindungsgemäßen Dachplatte und einem Dachhaken zur Befestigung eines Solarpanels oder eines Photovoltaikmoduls.

Die Form des Dachhakens ist grundsätzlich beliebig. Beispielsweise kann dieser gebogen sein. Vorzugsweise weist der Dachhaken ein Befestigungsmittel zur unmittelbaren Befestigung eines Solarpanels oder eines Photovoltaikmoduls oder zur Befestigung einer Montageschiene für ein Solarpanel oder ein Photovoltaikmodul auf.

Im montierten Zustand kann sich der Dachhaken beispielsweise auf der Dachplatte abstützen.

Optional können der Dachhaken und/oder das Solarpanel oder Photovoltaikmodul einen Bestandteil des Systems bilden. Alternativ oder zusätzlich kann eine Dachunterkonstruktion, z.B. eine Dachlatte, einen Bestandteil des Systems bilden.

Vorzugsweise liegt das System im montierten Zustand vor, d.h. die Bestandteile des Systems sind auf dem Dach montiert.

Beispielsweise kann der Dachhaken zunächst an der Dachunterkonstruktion befestigt, z.B. verschraubt, werden. Die Dachplatte kann dann derart platziert und/oder montiert werden, dass sich der Dachhaken zumindest abschnittsweise in einen Bereich oberhalb der Vorderseite der Dachplatte erstreckt. Optional kann sich der Dachhaken dort an der Dachplatte abstützen.

Am Dachhaken kann wiederum ein Solarpanel oder ein Photovoltaikmodul befestigt, z.B. verschraubt und/oder verklemmt, werden.

Im montierten Zustand kann der Dachhaken durch das Dichtelement hindurch geführt sein.

Schließlich betrifft die Erfindung ein Verfahren zur Montage einer erfindungsgemäßen Dachplatte und/oder eines erfindungsgemäßen Systems auf einem Dach, bei dem die Dachplatte am Einhängeabschnitt an einer Dachlatte eingehängt wird.

Beispielsweise kann zunächst ein Dachziegel ausgehängt werden. Daraufhin kann die Dachplatte am Einhängeabschnitt an einer Dachlatte eingehängt werden.

Optional kann ein Dichtelement bereits mit der Dachplatte verbunden, z.B. verklebt sein. Alternativ kann das Dichtelement erst auf dem Dach mit der Dachplatte verbunden, z.B. verklebt, werden. Je nach Dachhaken kann das Dichtelement, z.B. mit einem Messer, eingeschnitten werden, um eine Durchführung des Dachhakens zu ermöglichen. Der Dachhaken kann hierbei bereits an der Dachunterkonstruktion befestigt, z.B. verschraubt, sein oder im Anschluss daran befestigt, z.B. verschraubt, werden. Der Dachhaken kann durch die Durchführung des Dichtelements geführt sein, sodass dieser zumindest abschnittsweise oberhalb der Oberseite der Dachplatte, z.B. des Abdeckbereichs, angeordnet ist.

Optional kann eine mit der Grundfläche verbundene Metallschürze an einen unterhalb der Grundfläche angeordneten Dachziegel angeformt werden. Ein Monteur kann die Metallschürze hierbei per Hand an die Kontur des Dachziegels anpassen.

Alle hier beschriebenen Ausführungsformen und Bauteile der Vorrichtungen sind vorzugsweise dazu ausgebildet, nach dem hier beschriebenen Verfahren montiert zu werden. Ferner können alle hier beschriebenen Ausführungsformen der Vorrichtungen sowie alle hier beschriebenen Ausführungsformen des Verfahrens jeweils miteinander kombiniert werden, vorzugsweise auch losgelöst von der konkreten Ausgestaltung, in deren Zusammenhang sie erwähnt werden.

Generell wird bemerkt, dass Begriffe wie "ein" bzw. "eine" nicht zwingend "genau ein" bzw. "genau eine" bedeuten, wobei dies ebenso möglich ist. Die Begriffe "ein" bzw. "eine" können daher als "mindestens oder genau ein" bzw. "mindestens oder genau eine" verstanden werden. Die Verwendung des Singulars schließt vorzugsweise das Vorliegen der Bauteile im Plural mit ein und umgekehrt.

Es wird festgehalten, dass "vorzugsweise" und "bevorzugt" als "preferably" auf Englische übersetzt werden können. Ein durch "vorzugsweise" oder "bevorzugt" eingeleitetes Merkmal ist rein fakultativ, kann weggelassen werden und stellt keine Einschränkung, beispielsweise der Ansprüche, dar.

Die Erfindung wird im Folgenden beispielhaft unter Bezugnahme auf die Zeichnungen beschrieben. Es zeigen:
- Fig. 1: eine Perspektivansicht einer Ausführungsform einer erfindungsgemäßen Dachplatte von oben,
- Fig. 2: eine Perspektivansicht der Dachplatte gemäß Fig. 1 von unten,
- Fig. 3: eine Unteransicht der Dachplatte gemäß Fig. 1 mit eingeklappter Metallschürze,
- Fig. 4: eine Seitenansicht einer Ausführungsform eines Einhängeabschnitts einer erfindungsgemäßen Dachplatte, und
- Fig. 5: eine Perspektivansicht einer Ausführungsform eines erfindungsgemäßen Systems.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Die Anzahl, Breite, Größe, Form und/oder Position der Einhängeabschnitte, Metallschürzen, Riffelungen und/oder Dichtelemente ist grundsätzlich beliebig.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

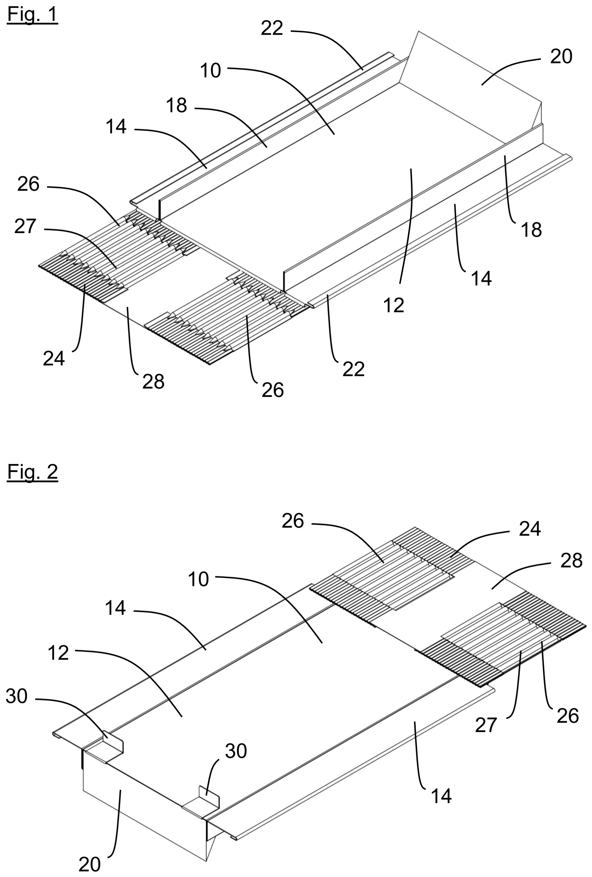

Fig. 1 zeigt eine Dachplatte mit einer, z.B. rechteckigen und/oder öffnungsfreien, Grundfläche 10.

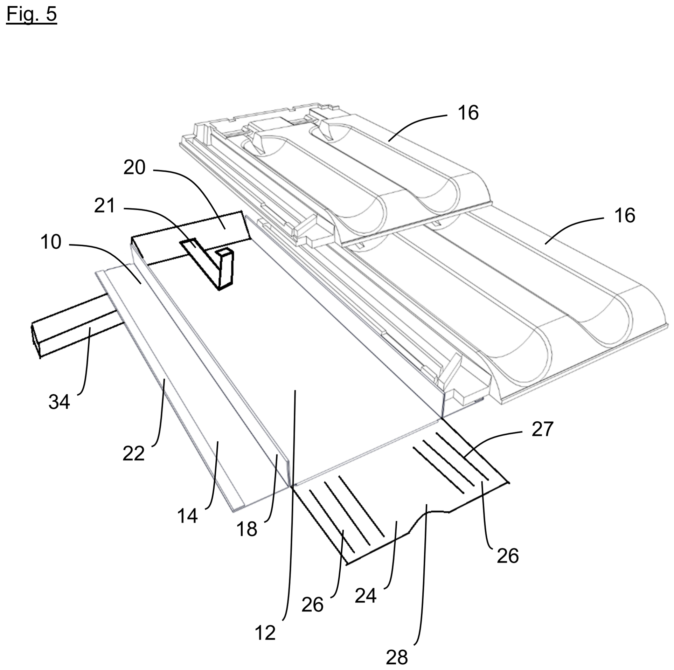

Die Grundfläche 10 weist einen, vorzugsweise zentralen, Abdeckbereich 12 zum Abdecken eines ziegelfreien Dachbereichs sowie zwei Auflagebereiche 14 zum Auflegen von Dachziegeln 16 (siehe Fig. 5) auf.

Die, z.B. rechteckigen, Auflagebereiche 14 sind an gegenüberliegenden Seiten des Abdeckbereichs 12 angeordnet.

Vorzugsweise liegen die Auflagebereiche 14 und der Abdeckbereich 12 in derselben Ebene.

Zwischen den Auflagebereichen 14 und dem Abdeckbereich 12 ist jeweils ein Steg 18 vorgesehen. Der Abdeckbereich 12 bildet mit den beiden Stegen 18 einen Ablauf für Regenwasser.

Die Stege 18 kragen, z.B. rechtwinklig, über die Grundfläche 10 aus und erstrecken sich vorzugsweise über die gesamte Länge der Grundfläche 10.

Im Bereich einer Oberkante der Grundfläche 10 ist ein Dichtelement 20 vorgesehen. Dieses kann z.B. keilförmig ausgebildet sein und/oder mit der Grundfläche 10 verklebt sein.

Das Dichtelement 20 kann sich beispielsweise lediglich über den Abdeckbereich 12 erstrecken. Alternativ kann sich das Dichtelement 20 über die gesamte Breite der Grundfläche 10 erstrecken. Beispielsweise kann hierbei neben dem Dichtelement 20 des Abdeckbereichs 12 jeweils ein Dichtelement an den beiden Auflagebereichen 14 vorgesehen sein.

Das Dichtelement 20 lässt sich vorzugsweise leicht bearbeiten, zum Beispiel mittels eines Messers. So kann z.B. ein Schlitz zum Durchführen eines Dachhakens 21 (siehe Fig. 5) in das Dichtelement 20 eingeschnitten werden.

An den außenseitigen Endbereichen der Auflagebereiche 14, also den Endbereichen, welche den Stegen 18 gegenüber liegen, sind Erhebungen 22 vorgesehen.

Die Auflagebereiche 14 bildet mit jeweils einem Steg 18 und einer Erhebung 22 einen Ablauf für Regenwasser.

Die Stege 18 und Erhebungen 22 sind z.B. einstückig mit der Grundfläche 10 ausgebildet. Beispielsweise können diese gefalzt und/oder abgekantet sein.

An einem im montierten Zustand unteren Bereich der Grundfläche 10 kann optional eine flexible Metallschürze 24 vorgesehen sein. Diese kann Anpassbereiche 26 mit Riffelungen 27 und einen ungeriffelten Zwischenbereich 28 aufweisen. Alternativ kann auch die gesamte Metallschürze 24 Riffelungen 27 aufweisen.

Die Riffelungen 27 können zum Beispiel teilweise geplättet sein.

Fig. 2 zeigt eine Unteransicht der Dachplatte.

Zwei, vorzugsweise plattenförmige, Einhängeabschnitte 30 kragen bezüglich der Grundfläche 10 in die entgegengesetzte Richtung wie die Stege 18 aus. Die Einhängeabschnitte 30 sind im montierten Zustand also nach unten bzw. hinten orientiert.

Vorzugsweise sind die Einhängeabschnitte 30 rechtwinklig zur Grundfläche 10 und/oder rechtwinklig zu den Stegen 18 orientiert.

Die Einhängeabschnitte 30 sind an der Unterseite/Rückseite der Grundfläche 10 angeordnet. Diese können an der Unterseite/Rückseite des Abdeckbereichs 12 und/oder an der Unterseite/Rückseite der Auflagebereiche 14 vorgesehen sein.

Die Einhängeabschnitte 30 sind gegenüber der Oberkante der Grundfläche 10 zurückversetzt.

Die Grundfläche 10 und die Einhängeabschnitte 30 sind z.B. einstückig ausgebildet. Beispielsweise können die Einhängeabschnitte 30 gefalzt und/oder abgekantet sein.

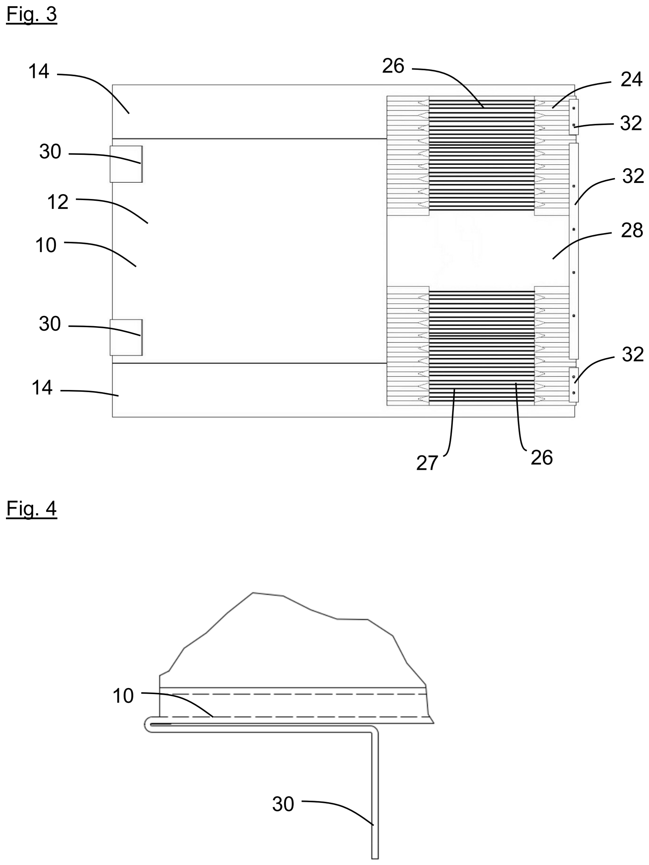

Wie in Fig. 3 zu sehen ist, kann die Grundfläche 10 an einem, den Einhängeabschnitten 30 gegenüberliegenden Endbereich, also einem im montierten Zustand unteren Bereich, wenigstens eine Abkantung 32 aufweisen.

Bevorzugt weisen der Abdeckbereich 12 sowie die beiden Auflagebereiche 14 jeweils eine Abkantung 32 auf.

Bevorzugt ist die Metallschürze 24 dort an der Grundfläche 10, z.B. punktuell, verdrückt.

Dies ermöglicht eine einfache, öffnungsfreie Befestigung der Metallschürze 24 an der Grundfläche 10.

Bei Bedarf kann die Metallschürze 24 um 180° von hinten nach vorne gebogen werden, wie es in Fig. 1 und 2 dargestellt ist. Zum Lagern und/oder Transportieren ist der eingeklappte Zustand hingegen vorteilhaft.

Fig. 4 zeigt eine Detailansicht eines Einhängeabschnitts 30.

Der Einhängeabschnitt 30 kann beispielsweise einstückig aus der Grundfläche 10 ausgeformt sein.

In Fig. 5 ist ein System mit einer Dachlatte 34, einer Dachplatte mit einer optionalen Metallschürze 24 sowie einem Dachhaken 21 dargestellt.

Die Dachplatte wird über Einhängeabschnitte 30 an der Dachlatte 34 eingehängt.

Der Dachhaken 21 wird durch einen Schlitz im Dichtelement 20 geführt.

Schließlich wird die verformbare Metallschürze 24 an die Kontur eines darunter liegenden Dachziegels 16 (nicht gezeigt) angepasst. Beispielsweise kann sich der Zwischenbereich 28 dabei wölben.

### Bezugszeichenliste

- 10: Grundfläche
- 12: Abdeckbereich
- 14: Auflagebereich
- 16: Dachziegel
- 18: Steg
- 20: Dichtelement
- 21: Dachhaken
- 22: Erhebung
- 24: Metallschürze
- 26: Anpassbereich
- 27: Riffelung
- 28: Zwischenbereich
- 30: Einhängeabschnitt
- 32: Abkantung
- 34: Dachlatte

## Patentansprüche

1. Dachplatte, aufweisend
eine, vorzugsweise rechteckige, Grundfläche (10) mit einem Abdeckbereich (12) zum Abdecken eines ziegelfreien Dachbereichs und mit zwei Auflagebereichen (14) zum Auflegen von Dachziegeln (16), wobei die Auflagebereiche (14) an gegenüberliegenden Seiten des Abdeckbereichs (12) angeordnet sind,
zwei, vorzugsweise rechtwinklig, über die Grundfläche (10) auskragende Stege (18), wobei zwischen den Auflagebereichen (14) und dem Abdeckbereich (12) jeweils ein Steg (18) vorgesehen ist, und
wenigstens einen, vorzugsweise rechtwinklig, über die Grundfläche (10) auskragenden Einhängeabschnitt (30), der an einem im montierten Zustand oberen Bereich der Grundfläche (10) vorgesehen ist, wobei der Einhängeabschnitt (30) bezüglich der Grundfläche (10) in die entgegengesetzte Richtung wie die Stege (18) auskragt.

2. Dachplatte nach Anspruch 1,
**dadurch gekennzeichnet,**
**dass** der Einhängeabschnitt (30) bezüglich einer Oberkante der Grundfläche (10) zurückversetzt ist.

3. Dachplatte nach Anspruch 1 oder 2,
**dadurch gekennzeichnet,**
**dass** wenigstens oder genau zwei voneinander beabstandete Einhängeabschnitte (30) vorgesehen sind.

4. Dachplatte nach einem der vorhergehenden Ansprüche,
**dadurch gekennzeichnet,**
**dass** an einem im montieren Zustand unteren Bereich der Grundfläche (10) eine plattenförmige Metallschürze (24) vorgesehen ist.

5. Dachplatte nach Anspruch 4,
**dadurch gekennzeichnet,**
**dass** die Metallschürze (24) wenigstens einen verformbaren Anpassbereich (26) aufweist.

6. Dachplatte nach einem der vorhergehenden Ansprüche,
**dadurch gekennzeichnet,**
**dass** die Metallschürze (24) Riffelungen (27) aufweist.

7. Dachplatte nach Anspruch 6,
**dadurch gekennzeichnet,**
**dass** die Riffelungen (27) wellenförmige, sägezahnförmige, rechteckförmige und/oder trapezförmige Strukturen aufweisen oder daraus bestehen.

8. Dachplatte nach einem der vorhergehenden Ansprüche,
**dadurch gekennzeichnet,**
**dass** ein, vorzugsweise keilförmiges, Dichtelement (20) vorgesehen ist, das an einem im montierten Zustand oberen Bereich der Grundfläche (10), vorzugsweise des Abdeckbereichs (12), angeordnet ist.

9. System mit einer Dachplatte nach einem der vorhergehenden Ansprüche und einem Dachhaken (21) zur Befestigung eines Solarpanels oder eines Photovoltaikmoduls.

10. Montageverfahren einer Dachplatte nach einem der Ansprüche 1 bis 8 und/oder eines Systems nach Anspruch 9 auf einem Dach, bei dem die Dachplatte am Einhängeabschnitt (30) an einer Dachlatte (34) eingehängt wird.
